# EUROPEAN PATENT APPLICATION

(11) **EP 2 341 260 A2**
(43) Date of publication of application: **06.07.2011**
(21) Application number: 11150006.2
(22) Date of filing: 03.01.2011
(51) Int. Cl.: F16C 33/60, F16C 33/36

(54) **Roller bearing adjustable for positioning**

(30) Priority: 04.01.2010 JP 2010000137
(71) Applicant: NTN Corporation, Osaka-shi, Osaka (JP)
(72) Inventor: Kono, Shingo, Iwata-shi Shizuoka (JP)
(74) Representative: Grünecker, Kinkeldey, Stockmair & Schwanhäusser Anwaltssozietät

(57) **Abstract**

[Object] A support bearing is provided which can be easily axially positioned relative to a shaft portion.

[Structure] The support bearing (14) is disposed between a shaft portion 3 and an outer member 10, 10'. The support bearing (14) includes a shell outer race 15 provided radially inwardly of the outer member, and including a cylindrical portion 15c fixed to a radially inner portion of the outer member 10, 10', first and second flanges 15a and 15e radially inwardly extending from respective axial ends of the cylindrical portion 15c, needle rollers 16 disposed between the first and second flanges 15a and 15e, and a retainer 11 disposed between action members 2, 9 provided at respective axial ends of the shaft portion 3 and having a sectional area larger than that of the shaft portion 3, and retaining the needle rollers 16, the retainer 11 having axial end portions protruding axially outwardly from the first and second flanges 15a and 15e, respectively, and having a radially outwardly protruding anti-separation protrusion 11a received in an anti-separation recess 17 formed in the radially inner surface of the shell outer race 15, thereby restricting the axial movement of the retainer 11 relative to the shell outer race 15.

## Description

This invention relates to a support bearing for supporting e.g. a crankshaft or a camshaft.

A plurality of axially spaced apart support shafts are used to support a crankshaft or a camshaft of an internal combustion engine mounted e.g. on an automobile.

An assembled crankshaft a plurality of axially aligned and axially spaced apart crank webs, and crank pins or shaft portions disposed between and connecting together the respective adjacent crank webs. The crank pins have a circular cross-section and have a smaller cross-sectional area than the crank webs. The crank pins are fixedly press-fitted in holes formed in the respective adjacent crank webs that are offset from the centers of the respective crank webs.

Support bearings are provided around the respective crank pins. Connecting rods have their large ends connected to the crankshaft through the respective support bearings.

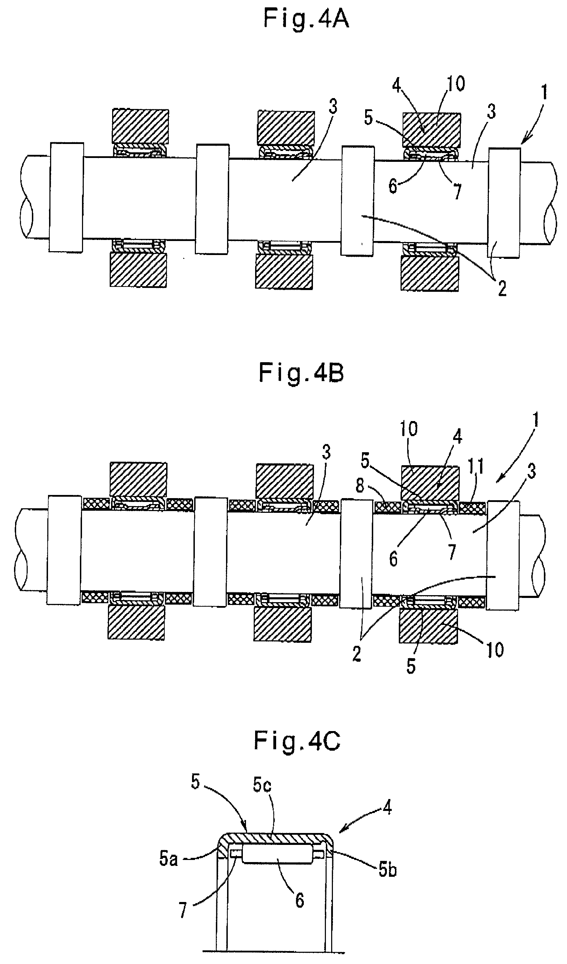

A typical camshaft is shown in Figs. 4A to 4C, which comprises a plurality of axially aligned and axially spaced apart cam members 2, and shaft portions 3 disposed between the respective adjacent cam members 2. The shaft portions 3 have a smaller cross-sectional area than the cam members 2.

The shaft portions 3 have a circular cross-section, and support bearings 4 are provided around the respective shaft portions 3. The camshaft 1 is supported in a device such as a cylinder head through the support bearings so as to be rotatable about its axis.

Each support bearing 4 is disposed between one of the shaft portions 3 and a housing 10 as an outer member, and comprises an outer race 5 in the form of a shell, needle rollers 6 and a retainer 7.

Fig. 4A shows the state before spacers 8 are mounted, and Fig. 4B shows the state after the spacers 8 are mounted. Fig. 4C shows the detailed structure of one of the support bearings 4. This structure is disclosed e.g. in JP Patent Publication 2009-127807A.

Fig. 5 shows a split bearing as the support bearing 4 supporting one of the shaft portions 3 of the above-described crankshaft or camshaft.

The split bearing shown is provided around the outer periphery of each of the shaft portions 3 of a crankshaft 1', and comprises an outer race 5 comprising two split pieces (5x and 5y) or three split pieces, engaging elements 6 such as needle rollers disposed radially inwardly of the outer race 5, and a retainer 7 retaining the engaging elements 6 so as to be aligned in the circumferential direction. Numeral 10' indicates a connecting rod.

The retainer 7 has a protrusion 7a at least at a first axial end thereof which extends radially outwardly so as to radially overlap and axially face a first axial end of the outer race, thereby preventing the movement of the retainer from the first toward second axial ends of the outer race. With this arrangement, it is possible to omit thrust washers which were heretofore necessary in order to prevent direct contact of the support shaft 4 with the crank webs 9. This structure is disclosed e.g. in JP Patent Publication 2006-322581A.

This type of support bearing 4 is narrower in width than the outer member such as a housing 10 or a connecting rod 10'. Thus, before the support bearing is set in position to e.g. the housing 10, the bearing is freely movable between the cam members 2 or between the crank webs 9. This makes it necessary to manually retain the individual support bearings 4 in order to axially position them relative to the respective shaft portions 3. Spacers 8 add to the number of parts and complicate the assembling steps.

It may be feasible to use a wider support bearing 4 so that the support bearing 4 can be easily axially positioned relative to the shaft portion 3. But it is not preferable that e.g. the outer race 5 of the support bearing 4 is wider than the outer member such as the housing 10 or the connecting rod 10'.

An object of this invention is to provide a support bearing which can be easily axially positioned relative to the shaft portion when mounting on the shaft portion.

In order to achieve this object, the present invention provides a support bearing disposed between a shaft portion and an outer member provided around the shaft portion, thereby supporting the shaft portion and the outer member so as to be rotatable relative to each other, characterized in that the support bearing comprises a shell outer race provided radially inwardly of the outer member, the shell outer race comprising a cylindrical portion fixed to a radially inner portion of the outer member, first and second flanges radially inwardly extending from respective axial ends of the cylindrical portion, needle rollers disposed between the first and second flanges so as to be in rolling contact with the inner periphery of the cylindrical portion and the outer periphery of the shaft portion, and a retainer disposed between action members provided at respective axial ends of the shaft portion and having a sectional area larger than that of the shaft portion, and retaining the needle rollers, the retainer having axial end portions protruding axially outwardly from the first and second flanges, respectively, and having a radially outwardly protruding anti-separation protrusion received in an anti-separation recess formed in the radially inner surface of the shell outer race, thereby restricting the axial movement of the retainer relative to the shell outer race.

Since both axial end portions of the retainer protrude axially outwardly from the shell outer race, the support bearing can be axially positioned relative to the shaft portion by the retainer. In particular, since both axial end portions of the retainer protrude axially outwardly from the shell outer race, both axially outer ends abut the respective action members at both ends of the shaft portion, thereby making it easier to axially position the support bearing.

The shell outer race is positioned relative to the retainer by the anti-separation protrusion of the retainer and the anti-separation recess formed in the shell outer race. In particular, the anti-separation recess of the shell outer race restricts the axial movement of the anti-separation protrusion and thus the retainer.

In this arrangement, the support bearing may be configured such that first and second opposite axial distances from the anti-separation protrusion to the shell outer race are always larger than the axial distances between the axial end surfaces of the respective action members and the corresponding axial end portions of the retainer, respectively.

With this arrangement, when either of the axial ends of retainer abuts the action member, the anti-separation protrusion is kept out of contact with (and thus not restrained by) the anti-separation recess. Thus, the retainer is guided (positioned) between the end surfaces of the action members, which have a larger sectional area than the shaft portion.

In one arrangement, the anti-separation recess may has an axial end portion defined by an inner surface of the second flange, the protrusion and the inner surface being configured such that when the retainer moves in one axial direction relative to the shell outer race, the protrusion abuts the inner surface, thereby preventing any further movement of the retainer in the one axial direction relative to the shell outer race.

With this arrangement, positioning of the shell outer race relative to the retainer is effected by the anti-separation protrusion of the retainer and the above inner surface of the second flange. When the anti-separation protrusion abuts the inner surface of the second flange, the retainer cannot move in the one axial direction any further.

In the case of a camshaft, the outer member corresponds to a housing and the action members correspond to cam members. In the case of a crankshaft, the outer member corresponds to a connecting rod and the action members correspond to crank webs.

The shell outer race may include a connecting portion connecting the second flange to the cylindrical portion and having a wall thickness thinner than the cylindrical portion.

Ordinarily, the second flange is formed by bending after inserting the retainer into the shell outer race from its end where the second flange is to be formed. After inserting the retainer, the second flange is formed by being so that the shell outer race has a U-shaped section. In this arrangement, the thin-walled connecting portion is advantageous.

In particular, since this thin-walled connecting portion is provided at the end portion of the shell outer race corresponding to the anti-separation protrusion of the retainer, it is possible to easily form the second flange by bending the axial end portion of the shell outer race after inserting the needle rollers and the retainer into the shell outer race (at least until the anti-separation protrusion is inserted into the shell outer race), thereby preventing separation of the retainer.

The connecting portion may include a first large-diameter portion provided axially between the cylindrical portion and the second flange and having a larger diameter than the radially inner surface of the cylindrical portion, and a second large-diameter portion provided axially between the first large-diameter portion and the second flange and having a larger diameter than the first large-diameter portion.

Since the radially outer surface of the shell outer race, which is fixed to the radially inner surface of the outer member, ordinarily extends in a straight line in the axial direction, the first large-diameter portion has a thinner wall thickness than the cylindrical portion, and the second large-diameter portion has a thinner wall thickness than the first large-diameter portion. Thus, the second flange is formed by bending the end portion of the shell outer race around the second large-diameter portion. The first large-diameter portion, which is located nearer to the needle rollers than is the second large-diameter portion, defines, in cooperation with the second large-diameter portion, the anti-separation recess in which the anti-separation protrusion can move.

Since there remains a gap between the anti-separation protrusion of the retainer and the shell outer race both in the axial and radial directions, the retainer is rotatable and simultaneously, the shell outer race is axially positioned (inseparable).

The connecting portion is preferably subjected to annealing, because the connecting portion is bent when forming the second flange, and the anti-separation protrusion of the retainer is repeatedly brought into and out of contact with the connecting portion.

The anti-separation protrusion may extend continuously over the entire circumference of the retainer. Or there may be provided a plurality of the anti-separation protrusions formed discontinuously over the entire circumference of the retainer.

The second flange may have a radially inner side edge having an inner diameter larger than the inner diameter of the radially inner surface of the cylindrical portion. With this arrangement, it is possible to mount the retainer and the needle rollers after forming the second flange by bending.

The outer diameter of the anti-separation protrusion and the inner diameter of the second flange may be determined freely depending on the use and function of the support bearing and the performance required for the support bearing. But for example, the anti-separation protrusion may have an outer diameter larger than the inner diameter of the second flange by 0.01 to 0.5 mm.

Rotation support devices having such a support bearing includes a camshaft of an internal combustion engine and its support device and a crankshaft and its support device.

According to the present invention, the support bearing can be easily axially positioned relative to the shaft portion.

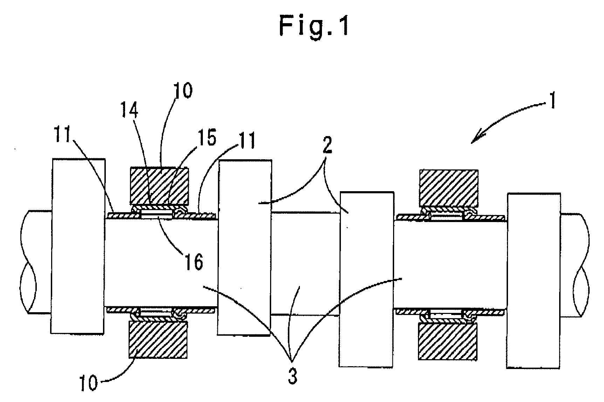

Fig. 1 is a front view of an embodiment of the present invention;

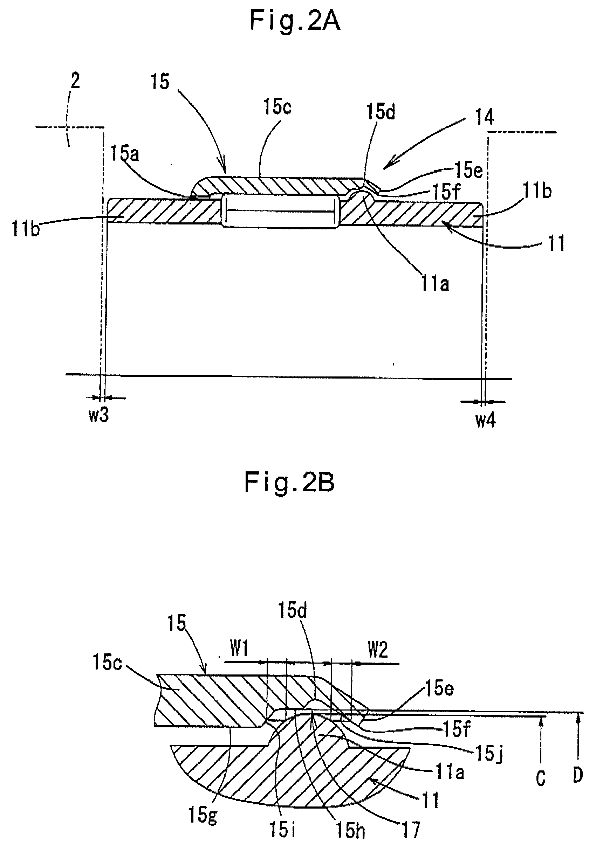

Fig. 2A is a sectional view of a support bearing used in the embodiment of Fig. 1;

Fig. 2B is a enlarged view of Fig. 2A;

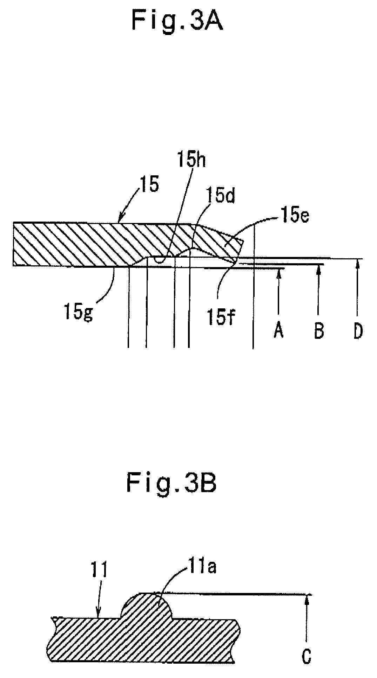

Fig. 3A is a partial enlarged view of a shell outer race of the support bearing of Fig. 2A;

Fig. 3B is a partial enlarged view of a retainer of the support bearing of Fig. 2A;

Figs. 4A and 4B are front views of conventional arrangements;
Fig. 4C is a partial enlarged view of a support bearing used in the conventional arrangements of Figs. 4A and 4B; and

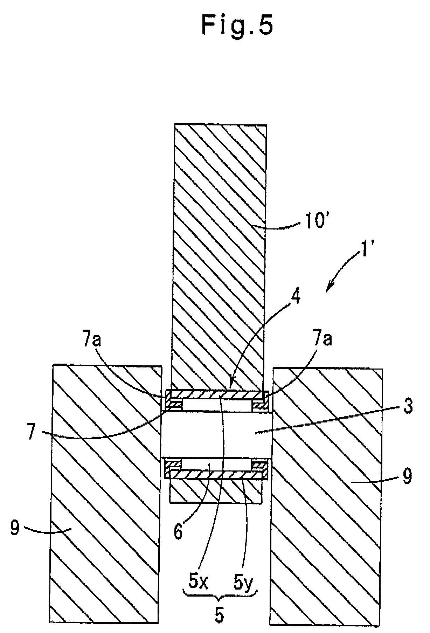

Fig. 5 is a front view of another conventional arrangement.

The embodiment of the present invention is now described with reference to Figs. 1 to 3. This embodiment is directed to a rotation support device comprising a camshaft 1 and support bearings 14 mounted on the camshaft 3.

As shown in Fig. 1, the camshaft 1 comprises cam members 2 (action members) and shaft portions 3 having a circular cross-section and disposed between the respective adjacent cam members 2. The support bearings 14 are needle roller bearings each disposed between one of the shaft portions 3 and a housing 10 (outer member) located radially outwardly of the shaft portion 3. The housing 10 comprises circumferentially split two pieces. The housings 10 and the shaft portions 3 are supported by the respective support shafts 14 so as to be rotatable relative to each other about their axes.

The support bearings 14 each include a shell outer race 15 fixed to the radially inner portion of the housing 10. The shell outer race 15 comprises a cylindrical portion 15c fixed to the radially inner portion of the housing 10, and flanges 15a and 15e protruding radially inwardly from the respective ends of the cylindrical portion 15c. A plurality of needle rollers 16 are disposed between the flanges 15a and 15e so as to be in rolling contact with the inner periphery of the cylindrical portion 15c and the outer periphery of the shaft portion 3.

The cam members 2 at the respective ends of the shaft portion 3 have a larger cross-sectional area than the shaft portion 3, and their axial end surfaces extend perpendicular to the axis of the camshaft 1. The axis of the shell outer race 15 substantially coincides with the axis of the housing 10.

The support bearing 14 further includes a retainer 11 having pockets (not shown) circumferentially spaced apart from each other. The plurality of needle rollers 16 are received in the respective pockets of the retainer so as to be retained in position in the axial and circumferential directions while being circumferentially spaced apart from each other.

The retainer 11 is a cylindrical member having, on its radially outer surface, circumferentially aligned and circumferentially discontinuous anti-separation protrusions 11a at its portion axially displaced to one side (e.g. right-hand side, as shown) from the pockets.

The retainer 11 has axial end portions protruding axially outwardly from the respective flanges 15a and 15e of the shell outer race 15. Thus, the retainer 11 is larger in axial width than the shell outer race 15. The axial width of the retainer 11 is slightly shorter than the distance between the opposed end surfaces of the cam members 2.

Thus, the retainer 11 is freely rotatable about the axis of the shaft portion 3. In Fig. 2A, numerals w3 and w4 indicate, respectively, the axial distances between the axial end portions 11b of the retainer 11 and the end surfaces of the cam members 2 facing the respective axial end portions 11b.

Since the end portions of the retainer 11 protrude axially outwardly from the shell outer race 15, the support bearing 14 can be axially positioned by the retainer 11 relative to the shaft portion 3. In particular, since the end portions 11b of the retainer 11, which protrude axially outwardly from the shell outer race 15, abut the end surfaces of the respective cam members 2 on both sides of the shaft portion 3, the support bearing 14 can be axially positioned.

A connecting portion is disposed between the flange 15e at one axial end of the shell outer race 15 and the cylindrical portion 15c of the shell outer race 15. As shown in Fig. 2B, the connecting portion includes a first large-diameter portion 15h provided axially between the cylindrical portion 15c and the flange 15e and having a larger diameter than the radially inner surface 15g of the cylindrical portion 15c, and a second large-diameter portion 15d provided axially between the first large-diameter portion 15h and the flange 15e and having a larger diameter than the first large-diameter portion 15h. The connecting portion further includes a mounting portion 15i disposed between the cylindrical portion 15c and the first large-diameter portion 15h and having an inclined inner surface. The flange 15e has an inclined inner surface 15j.

An anti-separation recess 17 is defined by the mounting portion 15i, the first large-diameter portion 15h, the second large-diameter portion 15d and the inner surface 15j. The anti-separation protrusions 11a of the retainer 11 are engaged in the anti-separation recess 17, thereby restricting axial relative movement between the retainer 11 and the shell outer race 15. Specifically, when the anti-separation protrusions 11a of the retainer 11 abut the inner surface 15j of the flange 15e of the shell outer race 15, the retainer 11 cannot move axially relative to the shell outer race any further in the direction from the flange 15a toward the flange 15e. When the anti-separation protrusions 11a of the retainer 11 abut the axially inner end portion of the anti-separation recess, i.e. the mounting portion 15i, which is disposed between the cylindrical portion 15c and the first large-diameter portion 15h, the retainer 11 cannot move relative to the shell outer race 15 in the other axial direction any further.

In this embodiment, the shell outer race 15 and the retainer 11 are structured and dimensioned such that at any axial position of the retainer 11 relative to the shell outer race 15, the axial distance w2 between the protrusions 11a and the portion of the shell outer race 15 located axially outwardly of the protrusions 11a (i.e. the inner surface 15j) is always larger than the axial distance w4 between one of the end portions 11b of the retainer 11 having the protrusions 11a and the end surface of the corresponding cam member 2. With this arrangement, when the one of the end portions 11b of the retainer 11 abuts the cam member 2, the anti-separation protrusions 11a do not abut the inner surface 15j of the flange 15e of the shell outer race 15. Thus, the retainer 11 is guided (positioned) between the cam members 2.

In this embodiment, the shell outer race 15 and the retainer 11 are also structured and dimensioned such that at any axial position of the retainer 11 relative to the shell outer race 15, the axial distance w1 between the protrusions 11a and the portion of the shell outer race 15 located axially inwardly of the protrusions 11a (i.e. the mounting portion 15i) is always larger than the axial distance w3 between the other of the end portions 11b of the retainer 11 and the end surface of the corresponding cam member 2. With this arrangement, when the one of the other end portion 11b of the retainer 11 abuts the cam member 2, the anti-separation protrusions 11a do not abut the mounting portion 15i of the shell outer race 15. Thus, in this case too, the retainer 11 is guided (positioned) between the cam members 2.

This support bearing 14 is assembled e.g. as follows. As with conventional shell bearings, the flange 15a is formed beforehand, and the other flange 15e is formed by bending after assembling the bearing. Thus, the needle rollers 16 and the retainer 11 are axially inserted into the outer race from its end where the flange 15e is to be formed by bending.

The retainer 11 is pushed axially into the shell outer race together with the needle rollers 16 until the anti-separation protrusions 11a are received in the space defined by the first large-diameter portion 15h and the second-large diameter portion 15d of the connecting portion. In this state, the flange 15e is formed by radially inwardly bending the axial end portion of the shell outer race 15 connected to the connecting portion.

Since the connecting portion of the shell outer race 15 has a thinner wall thickness than the cylindrical portion 15c, the flange 15e can be easily formed by bending. The connecting portion is subjected to annealing for added strength after bending and improved endurance during use.

In this embodiment, as shown in Fig. 3A, the flange 15e, which corresponds to the anti-separation protrusions 11a of the retainer 11, has a radially inner side edge 15f having an inner diameter B larger than the inner diameter A of the inner surface 15g of the cylindrical portion 15c.

The anti-separation protrusions 11a of the retainer have an outer diameter C larger than the inner diameter B of the corresponding flange 15e by 0.01 to 0.5 mm.

In an alternative assembling method, the flange 15e is formed first by bending, the thus formed flange 15e is subjected to heat treatment, and then with the needle rollers 6 mounted to the retainer 11, the retainer 11 is forcibly pushed axially into the shell outer race 15 from its end having the flange 15e. In still another assembling method, the flange 15e is formed first by bending, the thus formed flange 15e is subjected to heat treatment, only the retainer 11 is inserted axially into the outer race 15 from its end having the flange 15e, and then the needle rollers 6 are fitted in the pockets of the retainer 11 from the radially inner side of the retainer 11.
With this arrangement, there remain the axial gaps w1 and w2 between the anti-separation protrusions 11a of the retainer 11 and the inner surface of the shell outer race 15, and the radial gap ((D-C)/2), where D is the inner diameter of the first large-diameter portion. Thus, the retainer 11 is rotatable about the axis of the shaft portion 3. The shell outer race 15 is axially held in position so as not to be separable.

Since the axial distances (spaces) w1 and w2 between the anti-separation protrusions 11a of the retainer 11 and the inner surface of the shell outer race 15 are always larger than the axial distances (spaces) w3 and w4 between the axial end surfaces of the respective cam members 2 and the corresponding end portions 11b of the retainer 11, the retainer 11 is guided between the cam members 2 on both sides. If a plurality of the support bearings 14 are used that are axially aligned with each other, all of the bearings 14 satisfy the above relationship. Thus, by setting only one of the plurality of bearings 14 relative to the corresponding housing 10, the other support bearings 14 are also automatically axially positioned. In this state, the upper piece of each of the two-piece housing 10 is clamped.

Thus, when a plurality of axially aligned support bearings 14 are used, it is not necessary to manually adjust the axial positions of all the support bearings 14. Also, it is possible to use shell type bearings as the support bearings. Thus, the support bearings can be manufactured at a low cost. A camshaft assembly comprising a camshaft and a plurality of support shafts 14 mounted on the camshaft can also be manufactured at a low cost and also can be assembled easily.

In the embodiments, the anti-separation recess 17 comprises a space defined by the mounting portion 15i, the first large-diameter portion 15h, the second large-diameter portion 15d, and the inner surface 15j of the flange 15e, which are provided to one side of the cylindrical portion 15c. But the anti-separation recess 17 is not limited to the particular shape shown, but may be of any other shape, provided the anti-separation protrusions 11a can be engaged in the recess 17, thereby restricting the axial movement of the retainer 11 relative to the shell outer race 15.

## Claims

1. A support bearing (14) disposed between a shaft portion (3) and an outer member (10, 10') provided around the shaft portion (3), thereby supporting the shaft portion (3) and the outer member (10, 10') so as to be rotatable relative to each other,
**characterized in that** the support bearing (14) comprises a shell outer race (15) provided radially inwardly of the outer member, the shell outer race (15) comprising a cylindrical portion (15c) fixed to a radially inner portion of the outer member (10, 10'), first and second flanges (15a and 15e) radially inwardly extending from respective axial ends of the cylindrical portion (15c), needle rollers (16) disposed between the first and second flanges (15a and 15e) so as to be in rolling contact with the inner periphery of the cylindrical portion (15c) and the outer periphery of the shaft portion (3), and
a retainer (11) disposed between action members (2, 9) provided at respective axial ends of the shaft portion (3) and having a sectional area larger than that of the shaft portion (3), and retaining the needle rollers (6), the retainer (11) having axial end portions protruding axially outwardly from the first and second flanges (15a and 15e), respectively, and having a radially outwardly protruding anti-separation protrusion (11a) received in an anti-separation recess (17) formed in the radially inner surface of the shell outer race (15), thereby restricting the axial movement of the retainer (11) relative to the shell outer race (15).

2. The support bearing of claim 1 wherein first and second opposite axial distances (w1 and w2) from the anti-separation protrusion (11a) to the shell outer race (15) are always larger than the axial distances (w3 and w4) between the axial end surfaces of the respective action members (2, 9) and the corresponding axial end portions of the retainer (11), respectively.

3. The support bearing of claim 1 or 2 wherein the anti-separation recess (17) has an axial end portion defined by an inner surface (15j) of the second flange (15e), the protrusion (11a) and the inner surface (15j) being configured such that when the retainer (11) moves in one axial direction relative to the shell outer race (15), the protrusion (11a) abuts the inner surface (15j), thereby preventing any further movement of the retainer (11) in the one axial direction relative to the shell outer race (15).

4. The support bearing of claim 3 wherein the shell outer race (15) includes a connecting portion connecting the second flange (15e) to the cylindrical portion (15c) and having a wall thickness thinner than the cylindrical portion.

5. The support bearing of claim 4 wherein the connecting portion includes a first large-diameter portion (15h) provided axially between the cylindrical portion (15c) and the second flange (15e) and having a larger diameter than the radially inner surface (15g) of the cylindrical portion (15c), and a second large-diameter portion (15d) provided axially between the first large-diameter portion (15h) and the second flange (15e) and having a larger diameter than the first large-diameter portion (15h).

6. The support bearing of claim 4 or 5 wherein the connecting portion is subjected to annealing.

7. The support bearing of any of claims 1 to 6 wherein the anti-separation protrusion (11a) extends continuously over the entire circumference of the retainer (11).

8. The support bearing of any of claims 1 to 6 wherein there are a plurality of the anti-separation protrusions (11a) formed discontinuously over the entire circumference of the retainer (11).

9. The support bearing of any of claims 1 to 8 wherein the second flange (15e) has a radially inner side edge having an inner diameter (B) larger than the inner diameter (A) of the radially inner surface (15g) of the cylindrical portion (15e).

10. The support bearing of any of claims 1 to 9 wherein the anti-separation protrusion (11a) has an outer diameter (C) larger than the inner diameter (B) of the second flange (15e) by 0.01 to 0.5 mm.

11. A rotation support device which includes the support bearing of any of claims 1 to 10.
